Europäisches Patentamt

European Patent Office

Office européen des brevets

(19)

(11) EP 0 834 049 B1

# (12) FASCICULE DE BREVET EUROPEEN

(45) Date de publication et mention
de la délivrance du brevet:
**13.01.1999 Bulletin 1999/02**

(21) Numéro de dépôt: **96922945.9**

(22) Date de dépôt: **18.06.1996**

(51) Int Cl.⁶: **F27B 3/20**, C21C 5/52,
F27B 3/22

(86) Numéro de dépôt international:
**PCT/FR96/00940**

(87) Numéro de publication internationale:
**WO 97/00413 (03.01.1997 Gazette 1997/02)**

(54) **PROCEDE DE FUSION D'UNE CHARGE DANS UN FOUR ELECTRIQUE A ARC**

SCHMELZVERFAHREN EINER LADUNG IM LICHTBOGENOFEN

METHOD FOR MELTING A BATCH IN AN ELECTRIC ARC FURNACE

(84) Etats contractants désignés:
**AT BE CH DE DK ES FI FR GB GR IE IT LI LU MC
NL PT SE**

(30) Priorité: **19.06.1995 FR 9507308**

(43) Date de publication de la demande:
**08.04.1998 Bulletin 1998/15**

(73) Titulaire: **L'AIR LIQUIDE, SOCIETE ANONYME
POUR
L'ETUDE ET L'EXPLOITATION DES PROCEDES
GEORGES CLAUDE
75321 Paris Cédex 07 (FR)**

(72) Inventeurs:
• **SLOOTMAN, Franck
F-78320 Le Mesnil-Saint-Denis (FR)**

• **PERRIN, Nicolas
Singapore 598831 (SG)**
• **VIRAIZE, Frédéric
F-92330 Sceaux (FR)**

(74) Mandataire: **Vesin, Jacques
L'AIR LIQUIDE, S.A.,
Service Propriété Industrielle,
75 quai d'Orsay
75321 Paris Cédex 07 (FR)**

(56) Documents cités:
**EP-A- 0 257 450          EP-A- 0 462 898
EP-A- 0 625 685          EP-A- 0 627 492
WO-A-95/09336          FR-A- 2 688 801
US-A- 4 730 336**

EP 0 834 049 B1

## Description

La présente invention concerne un procédé de fusion d'une charge dans un four, notamment un four électrique à arc, par apport d'énergie de fusion à la charge, dans lequel des gaz sont engendrés au cours de la fusion de la charge et notamment au moins un gaz combustible, en particulier le monoxyde de carbone, procédé dans lequel on injecte un gaz comburant, comportant plus de 25 % en volume d'oxygène, pendant au moins certaines périodes, afin de réaliser une post-combustion des gaz combustibles.

Par "gaz comburant comportant plus de 25 % en volume d'oxygène", on entend un gaz qui contient au moins 25 % en volume d'oxygène dans les conditions normales de température et de pression, notamment de l'air sur-oxygéné comportant de préférence plus de 50 % en volume d'oxygène mais plus préférentiellement de l'oxygène industriellement pur, c'est-à-dire ayant au moins 88 % en volume d'oxygène, incluant en particulier l'oxygène engendré par les appareils à adsorption du type VSA (Vacuum Switch Adsorption), ou tout autre générateur d'oxygène industriellement pur, y compris les systèmes utilisant des membranes.

Dans un four électrique à arc, notamment un four électrique à arc pour la fusion de ferrailles en vue de la production d'aciers, on réalise la fusion de la ferraille essentiellement par apport d'énergie de fusion à cette charge à travers les électrodes en graphite du four à travers lesquelles on fait passer un courant très important de manière à dégager une énergie suffisante pour fondre la ferraille présente dans ledit four.

Aujourd'hui, l'énergie fossile est de plus en plus utilisée pour accroître la productivité de ces fours. Ainsi, l'utilisation de charbons chargés en paniers ou injectés par lances permet l'utilisation d'énergie fossile. Cette énergie n'est utilisée que partiellement dans la mesure où la combustion du charbon est incomplète. Ainsi, des quantités importantes de monoxyde de carbone, CO, sont-elles libérées à partir de l'oxydation du carbone. Ce monoxyde de carbone est brûlé à l'oxygène dans le four selon le procédé dit de post-combustion pour four électrique à arc et décrit par exemple dans les brevets US-5.166.950, US-5.373.530 et EP-A-.127.492.

Le brevet US 5.166.950, au nom de la Demanderesse, décrit un procédé et une installation de fusion d'une charge dans notamment un four électrique à arc pour la fusion de ferrailles et la production d'aciers, par apport d'énergie de fusion à la charge et avec post-combustion des fumées par injection d'un gaz oxygéné dans un espace du four situé au-dessus de la charge. Dans le procédé décrit, on crée grâce aux injecteurs d'oxygène des courants de gaz rotatifs tournant en sens inverse dans l'espace du four situé au-dessus de la charge. De cette manière, on assure ainsi un mélange efficace du gaz comburant oxygéné avec les gaz combustibles présents tels que le monoxyde de carbone et/ou l'hydrogène qui sont issus de la charge, de telle manière à provoquer une post-combustion homogène de ces gaz dans le four, post-combustion qui contribue à la fusion de cette charge en coopération avec les électrodes verticales distribuées autour et au voisinage de l'axe vertical du four.

Le brevet US 5.373.530 (ainsi que EP-A-127.492) décrivent un injecteur de gaz oxygéné traversant l'enceinte du four afin de délivrer un jet de gaz oxygéné non radial par rapport à l'axe du four.

Il est également connu de l'article "Oxygen Injection for Effective Post-Combustion in the Electrical Arc Furnace", P. Mathur et G. Daughtridge, un procédé de post-combustion pour four électrique à arc utilisant une injection d'oxygène au-dessus du bain à vitesse supersonique (en général supérieure à 300 m/s) dans lequel l'oxygène vient frapper la surface du bain métallique en fusion (le laitier), ce qui provoque une oxydation du fer sous forme d'oxyde de fer FeO, une oxydation du fer avec le gaz carbonique présent engendrant de l'oxyde de fer FeO, du monoxyde de carbone, ainsi qu'une réaction du carbone avec le dioxyde de carbone pour engendrer du monoxyde de carbone. Ainsi cette injection supersonique d'oxygène engendre un mélange de gaz comportant une certaine quantité de gaz carbonique mais également une certaine quantité de monoxyde de carbone qui résulte notamment des réactions précitées. Ainsi, l'inconvénient d'un tel procédé est de ne pas utiliser pleinement la possibilité d'engendrer de l'énergie grâce au monoxyde de carbone produit dans le four.

Le procédé selon l'invention a pour but d'améliorer le rendement énergétique de la post-combustion par une maximisation à la fois de l'énergie libérée par cette post-combustion et du transfert de l'énergie correspondante vers le bain métallique, tout en assurant une longévité élevée du garnissage réfractaire du four et sans oxydation excessive des électrodes. Dans ce but, le procédé selon l'invention favorise au maximum la réaction du monoxyde de carbone avec l'oxygène de manière à former du dioxyde de carbone, au détriment des autres réactions non désirées, notamment les réactions d'oxydation du fer avec l'oxygène (Fe + ½ $O_2$ ⇒ FeO) et du gaz carbonique avec le fer ($CO_2$ + Fe ⇒ FeO + CO).

Le procédé de fusion d'une charge dans un four selon l'invention est caractérisé en ce que pendant les périodes où on réalise la post-combustion, on injecte le gaz comburant à basse vitesse au-dessus de la charge, sous la forme d'au moins un jet de gaz comburant, chaque jet ayant un débit compris entre 50 et 1200 $Nm^3$/h environ et une vitesse d'injection dans le four comprise entre 5 m/s et 150 m/s environ et de préférence entre 50 m/s et 125 m/s.

Dans un mode préférentiel de réalisation de l'invention, dans lequel le four est un four électrique à arc, le procédé selon l'invention est caractérisé en ce que la direction d'injection de chaque jet de gaz combustible coïncide sensiblement avec les courants gazeux principaux engendrés par la flamme d'arc, de préférence à contre courant.

Selon un autre mode de réalisation de l'invention, le procédé est caractérisé en ce que l'on prévoit un débit de maintien d'injection de gaz comburant dans le four au moins pendant certaines périodes où il ne se produit pas de post-combustion dans le four, à une vitesse comprise entre environ 5 m/s et 20 m/s, de manière à éviter ou à réduire le bouchage des injecteurs de gaz comburant.

Selon un autre mode de réalisation de l'invention, le procédé est caractérisé en ce que l'injection d'au moins un jet de gaz comburant est effectuée tangentiellement par rapport à la paroi du four, selon un angle compris entre 25° et 40°, de préférence de l'ordre d'environ 30°.

Selon un autre mode de réalisation de l'invention, celle-ci est caractérisée en ce que l'injection d'au moins un jet de gaz comburant est effectuée du haut vers le bas à partir de la paroi latérale du four, selon un angle compris entre 10° et 20°, et de préférence de l'ordre d'environ 15° par rapport à l'horizontale.

De préférence également, l'injection du gaz comburant sera réalisée à l'aide d'au moins trois injecteurs, de préférence au moins quatre injecteurs, de préférence régulièrement répartis sur la surface latérale du four. Cependant, lorsqu'on dispose de la place nécessaire sur le four, il est préférable de prévoir le plus grand nombre d'injecteurs possible, par exemple six ou même huit injecteurs.

Chaque jet de gaz comburant aura de préférence un débit compris entre 80 et 850 $Nm^3/h$ environ et une vitesse de sortie d'injecteur comprise entre 50 et 125 m/s environ, de préférence environ 100 m/s.

De préférence, on analysera en continu les fumées du four et on réglera le débit de gaz comburant en fonction des résultats de cette analyse: plus il y aura de gaz combustibles présents, plus on injectera d'oxygène, avec cependant des paliers d'injection d'oxygène de manière à limiter la température au voisinage des injecteurs à une valeur compatible avec la tenue en température des panneaux latéraux du four (panneaux refroidis à l'eau répartis tout autour du four). Ainsi, le débit de gaz comburant sera en général variable au cours de la coulée.

L'analyse des fumées consistera de préférence en une mesure de la concentration en monoxyde de carbone dans les fumées (exemple: 4% de CO en volume).

De préférence, on utilisera également plusieurs groupes d'injecteurs ayant en sortie une composante tangentielle par rapport à l'axe vertical du four, les groupes successifs d'injecteurs étant disposés soit au même niveau, soit à des niveaux différents.

Selon une autre variante de réalisation de l'invention, le débit de maintien dans le four pourra également être réalisé avec de l'air.

Il est également possible et quelque fois préférable de préchauffer le gaz comburant avant de l'injecter dans le four. Pour cela, on peut soit préchauffer le gaz comburant comportant de préférence plus de 25% en volume d'oxygène, par exemple par échange thermique indirect avec le four. Il est également possible de mélanger au moins une partie des fumées qui sortent du four avec le gaz comburant avant d'injecter l'ensemble dans le four. Dans ce cas, le gaz comburant (mélange fumée + gaz comburant) peut contenir moins de 25% en volume et même moins de 21% en volume d'oxygène.

En ce qui concerne le nombre d'injecteurs, on préférera utiliser au moins six injecteurs, car en règle générale, plus on utilise d'injecteurs, meilleurs sont les résultats obtenus. Ces injecteurs seront également de préférence tous localisés dans la moitié supérieure du four et plus préférentiellement dans la moitié supérieure du four par rapport au niveau du métal.

L'invention sera mieux comprise à l'aide des exemples de réalisation suivants, donnés à titre non limitatif, conjointement avec les figures qui représentent:

- la figure 1, une vue schématique en coupe verticale d'un four électrique de mise en oeuvre de l'invention,
- la figure 2, une vue schématique prise en coupe horizontale suivant la ligne II-II de la figure 1,
- la figure 3, une vue en coupe longitudinale plus détaillée et à plus grande échelle d'un injecteur d'oxygène du four,
- la figure 4, une vue schématique de dessus du four,
- la figure 5, une comparaison schématique de la combustion de l'art antérieur et celle de la présente invention,
- la figure 6, une courbe de consommations spécifiques d'électricité en fonction de la consommation spécifique d'oxygène, compte tenu du nombre d'injecteurs utilisés,
- la figure 7, un exemple de réalisation d'injection d'oxygène entre deux paliers par régulation sur le monoxyde de carbone.

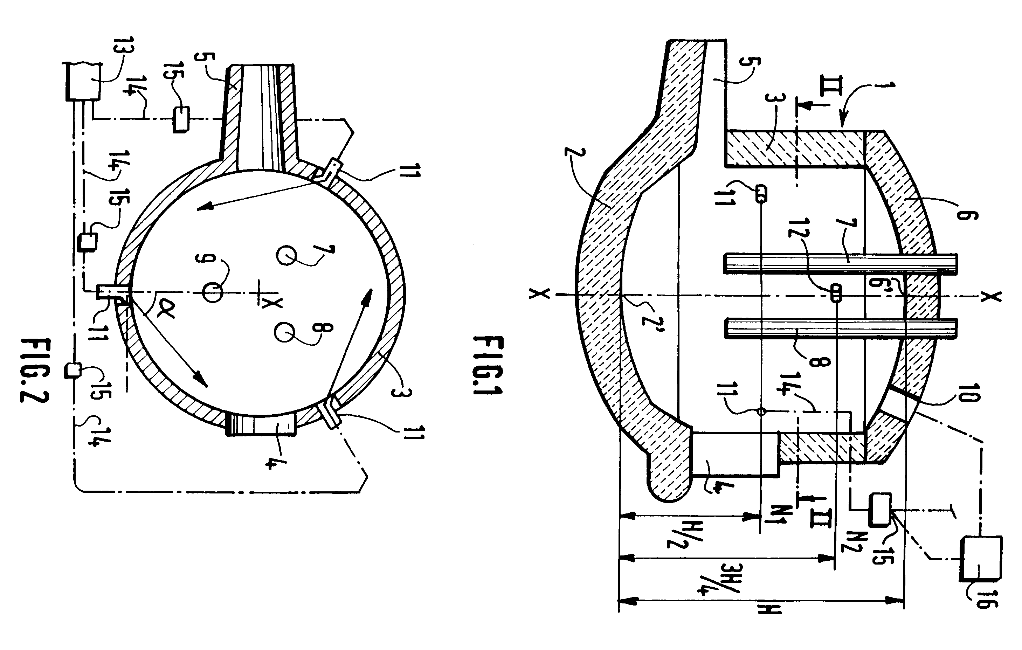

Le four électrique à arc représenté aux figures 1 et 2 est destiné à réaliser la fusion de ferrailles en vue de produire de l'acier. Il comporte une sole 2, une paroi latérale 3 avec une porte dite de décrassage 4 et un bec de coulée du produit de fusion 5, ainsi qu'une voûte 6 formant également support de trois électrodes 7, 8, 9 également réparties autour d'un axe vertical X-X. La voûte comporte un conduit 10 de sortie des fumées.

Le four 1 est équipé d'au moins deux séries étagées d'au moins deux, typiquement au moins trois, injecteurs de gaz oxygéné, respectivement 11 et 12. La première série d'injecteurs II est située à un niveau $N_1$, voisin de la moitié de la hauteur H entre le point le plus bas 2' de la sole 2 et le point le plus haut 6' de la voûte 6, alors que la seconde série d'injecteurs 12 est située à un niveau $N_2$ qui représente approximativement les 3/4 de cette même hauteur H. Les injecteurs 11 d'une part, 12 d'autre part sont donc situés dans deux plans horizontaux étagés, dont l'écart vertical est de l'ordre du quart de la hauteur maximale de voûte H. Chaque injecteur est orienté de façon à présenter une composante tangentielle principale et une composante radiale centripète. Les débouchés de la série inférieure d'injecteurs 11, au niveau $N_1 = H/2$ sont tous orientés, en vue de dessus, dans le sens inverse des aiguilles d'une montre, de façon à former un courant inférieur de gaz à circulation rotative dans le sens inverse des aiguilles d'une montre (figure 2). Les débouchés des injecteurs 12 de la série supérieure d'injecteurs, au niveau $N_2 = 3 H/4$, sont tous orientés, en vue de dessus, dans le sens des aiguilles d'une montre, de façon à former un courant supérieur de gaz à circulation rotative dans le sens des aiguilles d'une montre.

Les injecteurs sont alimentés en oxygène à une pureté d'au moins 90 % à partir d'une source 13 (figure 2), via des conduites respectives 14 munies d'organes de réglage respectifs 15.

Le four comporte également un analyseur 16 de la teneur en monoxyde de carbone (CO) dans les fumées évacuées par le conduit 10, cet analyseur ayant des moyens de commande des organes 15 de réglage de l'alimentation des injecteurs 11 et 12 en fonction des mesures qu'il effectue en continu et en temps réel.

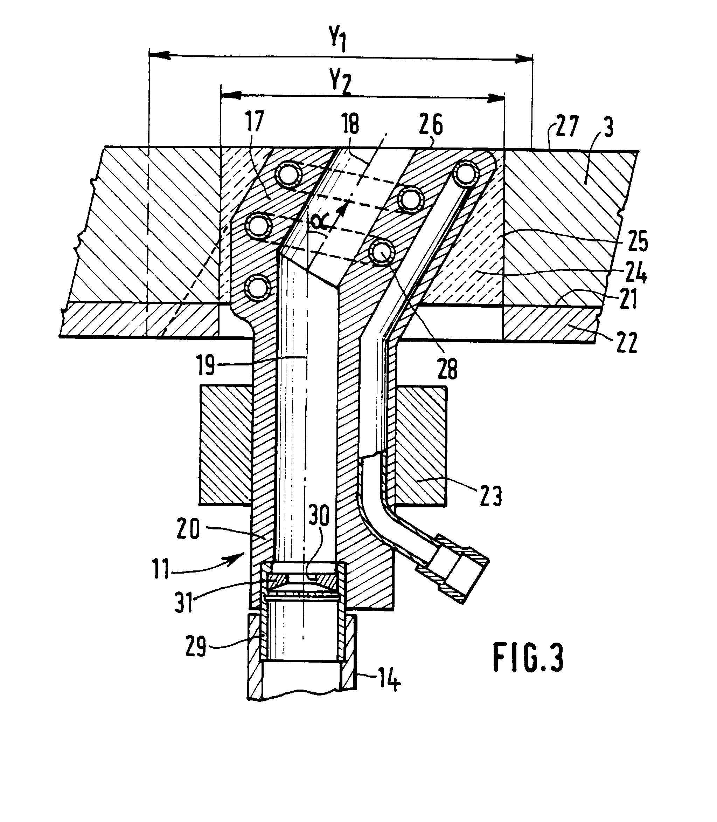

On se réfère maintenant à la figure 3, où il apparaît que l'un quelconque des injecteurs 11, 12, par exemple un injecteur 11, comprend une tête 17 disposée dans l'épaisseur de la paroi 3 du four et présentant un passage de gaz sensiblement cylindrique d'axe 18 incliné d'un angle a sur un axe 19 radial par rapport à l'axe vertical X-X du four repéré sur la figure 1.

La tête 17 est formée à l'extrémité d'un corps généralement cylindrique 20 d'axe confondu avec l'axe 19 quand l'injecteur est monté sur le four, ce corps étant creusé d'un passage de gaz prolongeant celui d'axe 18 qui traverse la tête, le corps débordant ainsi de la surface extérieure 21 de la paroi 3 du four, paroi portée classiquement par une structure de support 22 schématiquement représentée à la figure 2.

Le corps 20 de l'injecteur est monté à rotation autour de l'axe 19 dans un palier 23 de support, également schématiquement représenté à cette figure. Lorsque le réglage en rotation est réalisé, en fonction des particularités du four, la position de l'injecteur est fixée au moyen d'une matière de remplissage réfractaire 24 disposé entre la tête 17 et l'ouverture cylindrique 25 de la paroi 3 qui la reçoit. Quel que soit le réglage, la face avant 26 de la tête 17 affleure sensiblement la face intérieure 27 de la paroi 3.

On a encore représenté sur la figure 3 un circuit 28 de circulation d'un fluide de refroidissement tel que de l'eau froide. D'autres caractéristiques et avantages d'un tel injecteur sont décrits dans EP-A-127.492, au nom de la Demanderesse.

Un diaphragme 29 contenant un orifice calibré fixe 30 est monté dans un lamage 31 prévu dans l'extrémité arrière du corps 20, et la conduite d'alimentation 14 est raccordée à ce dispositif. Le diamètre de sortie des injecteurs est également fixe et très supérieur à celui de l'orifice 30. Il est compris entre 3 et 6 cm environ, et de préférence voisin de 5 cm.

De plus, comme dans le brevet européen précité, l'extrémité avant de la conduite 14 peut être équipée d'un clapet anti-retour de protection (non représenté).

En fonctionnement, on procède à des étapes alternées de chargement/coulée et de fusion. Pendant chaque étape, l'analyseur 16 compare la concentration en CO des fumées à une valeur basse de consigne et règle de façon correspondante l'alimentation des injecteurs.

Pendant tout le fonctionnement, le débit d'oxygène par injecteur est maintenu entre 50 et 1200 $Nm^3$/h environ (1 $Nm^3$/h est un $m^3$ dans les conditions normales de température et de pression), et la vitesse de sortie d'oxygène, compte tenu du dimensionnement des injecteurs et de la pression de sortie, qui est sensiblement la pression atmosphérique, est comprise entre 5 et 150 m/s environ. Les gammes de valeurs préférentielles sont, pour le débit par injecteur, de 100 à 900 $Nm^3$/h et, pour la vitesse de sortie, de 15 à 125 m/s.

Si le débit par injecteur dépasse 1200 $Nm^3$/h environ, il existe un risque élevé de destruction rapide des panneaux réfractaires qui constituent la paroi 3 du four et/ou d'oxydation d'au moins une électrode et/ou du bain métallique.

On a constaté qu'avec une telle combinaison de paramètres, la consommation spécifique en électricité, pour une consommation spécifique donnée en oxygène, est particulièrement faible.

Ceci a été confirmé par des essais effectués sur un four de 85 tonnes de capacité du type illustré sur les figures 1 à 3, ayant six injecteurs de diamètre de sortie 50 mm, avec un débit maximal par injecteur de 700 $Nm^3$/h affiché sur le dispositif de régulation 16 et un petit débit de protection des injecteurs de 50 à 70 $Nm^3$/h environ pendant les périodes hors courant.

La consommation électrique, dans ce four, s'est révélée nettement réduite lorsqu'on alimente tous les injecteurs, par rapport au cas où l'on alimente quatre des six injecteurs, pour une consommation spécifique d'oxygène sensiblement identique. Ceci met en évidence l'amélioration des performances de la post-combustion lorsqu'on réduit la vitesse de sortie d'injecteur des jets d'oxygène.

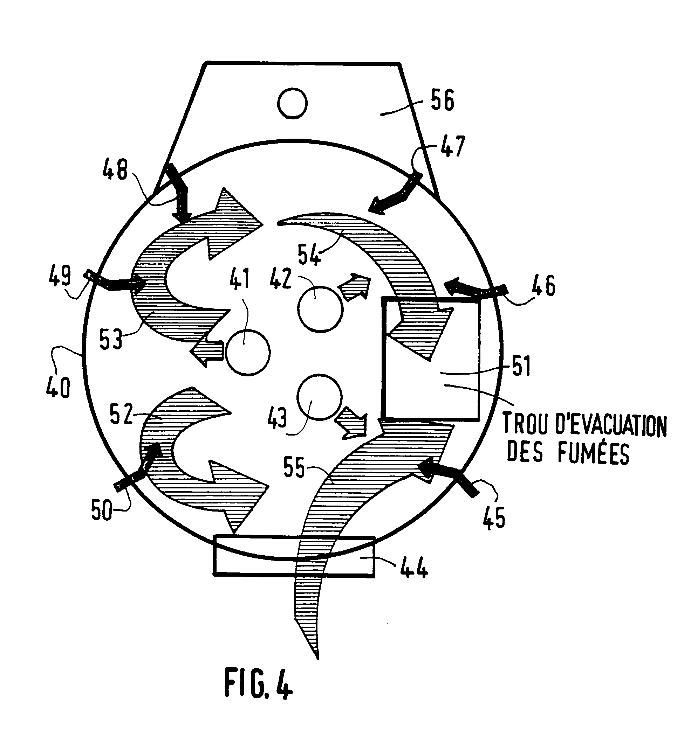

La figure 4 représente une vue schématique de dessus d'un four à arc avec une représentation schématique de l'écoulement des gaz dans le four. Le four 40 comporte trois électrodes 41, 42 et 43 qui traversent la voûte du four, par lesquels des gaz peuvent s'échapper. L'air entre essentiellement par l'ouverture 44 ou porte de décrassage (« slag door » en anglais) et s'échappe avec les fumées essentiellement par le « quatrième » trou 51. Le métal fondu est évacué par le trou de coulée 56. Six injecteurs d'oxygène 45, 46, 47, 48, 49 et 50 sont régulièrement répartis à la périphérie du four, sensiblement tous dans le même plan horizontal. Le mouvement des gaz et fumées dans le four est représenté par les flèches 52, 53, 54 et 55.

En fonctionnement, l'arc des électrodes repousse les gaz vers la périphérie. Le courant schématisé par la flèche 53 vient du centre (électrodes) se dirige vers la paroi 40 puis longe celle-ci et se dirige vers le quatrième trou 51. De même le courant schématisé par la flèche 54 longe la paroi du four et s'échappe par le quatrième trou 51. L'air entrant par la porte de décrassage (55) se dirige vers le « quatrième trou » 51 et un courant 52 s'éloigne des électrodes vers la paroi en direction de la porte 44 et le trou 51.

Selon l'invention, les injecteurs d'oxygène sont disposés de manière à injecter l'oxygène sensiblement à contre courant des fumées: l'injecteur 50 à contre courant du courant 52, 49 et 48 à contre courant du courant gazeux 53, 46 et 47 à contre courant du courant 54 et 45 à contre courant du courant gazeux 55.

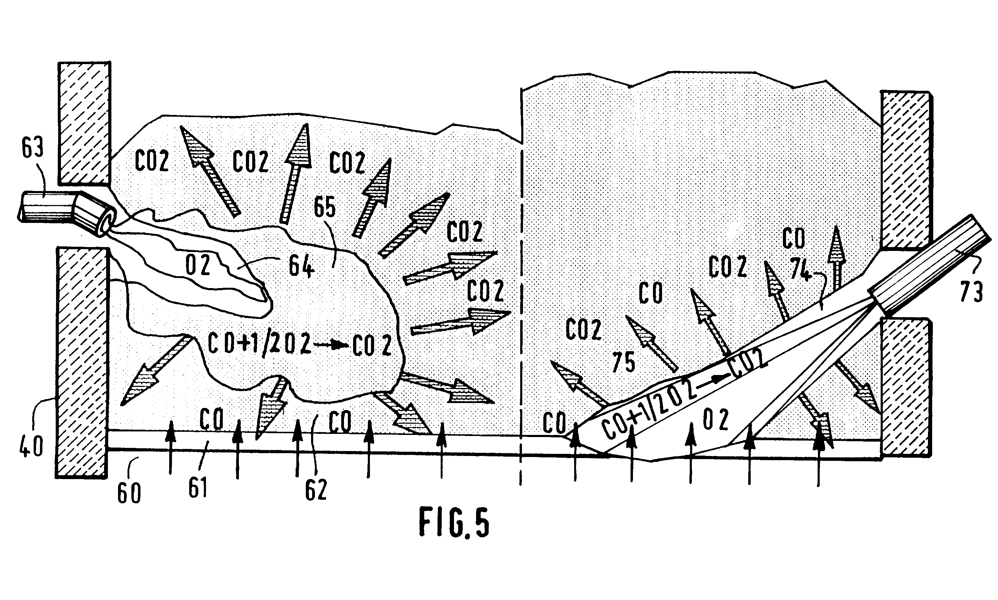

La figure 5 est une illustration comparative de l'art antérieur (partie droite de la figure) et de l'invention (partie gauche de la figure). Selon l'art antérieur, la lance à oxygène 73, dirigée vers la surface du laitier 61 au-dessus du bain métallique 60 injecte de l'oxygène à haute vitesse (supersonique) à travers les gaz/fumées du four 62.

Du fait de sa grande vitesse, l'oxygène entre en contact avec l'acier fondu et il se produit la réaction suivante:

$$Fe + \tfrac{1}{2}\,O_2 \rightarrow FeO$$

Cette réaction est néfaste car elle consomme du fer et de l'oxygène pour faire du laitier.

Le fer réagit également avec le dioxyde de carbone créé par réaction du monoxyde de carbone et de l'oxygène. Ce dioxyde de carbone est entraîné au contact du bain métallique par l'oxygène à haute vitesse, créant ainsi encore plus de laitier FeO et un peu de monoxyde de carbone, selon la réaction:

$$Fe + CO_2 \rightarrow FeO + CO$$

Malheureusement, le CO formé ne réagit pas avec l'oxygène, car celui-ci est consommé ailleurs (voir ci-dessus), à moins d'injecter des quantités d'oxygène considérables, dont une partie serait perdue.

Le dioxyde de carbone réagit aussi avec le carbone de l'acier fondu ce qui provoque une réaction de décarburation (donc néfaste) et engendre du CO qui est lui aussi non brûlé.

C'est après avoir établi l'existence des différents problèmes techniques cités ci-dessus et analysé les différentes réactions néfastes que la Demanderesse a mis au point l'invention, dans laquelle on injecte l'oxygène à basse vitesse par l'injecteur 63 créant un nuage gazeux 64 qui reste au-dessus du bain métallique 60, réagit avec le CO venant du bain dans la zone 65 (et seulement uniquement avec le CO) selon la réaction:

$$CO + \tfrac{1}{2}\,O_2 \rightarrow CO_2$$

Ainsi tout le monoxyde de carbone engendré par le bain est brûlé par l'oxygène et l'on réalise ainsi une réelle post-combustion (exothermique) du CO avec une quantité énergétiquement optimisée d'oxygène.

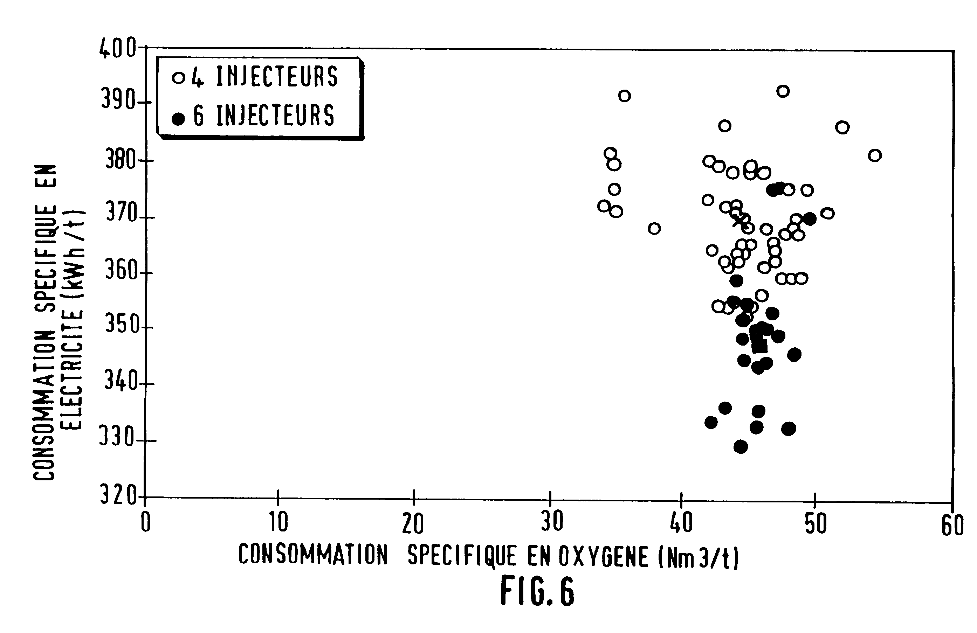

La figure 6 représente (points blancs) les consommations spécifiques en électricité (kWh/f) par rapport aux consommations spécifiques en oxygène avec quatre injecteurs, et (points noirs) avec six injecteurs d'oxygène, toutes choses égales par ailleurs. Chaque point représente une coulée. Il est clair que la consommation spécifique en électricité est nettement améliorée avec six injecteurs, par rapport à quatre.

En moyenne sur un grand nombre de coulées, on obtient les résultats suivants:

|  | 6 INJECTEURS | 4 INJECTEURS |
|---|---|---|
| CONSOMMATION O$_2$ PAR COULEE (MOYENNE) Nm$^3$/Tonne | 45.6 | 44.2 |
| DEBIT MOYEN (Nm$^3$/h) | 280 | 425 |
| VITESSE DE L'OXYGENE INJECTE (m/s) | 40 | 60 |
| CONSOMMATION ELECTRIQUE (kWh/T) | 347 | 369 |

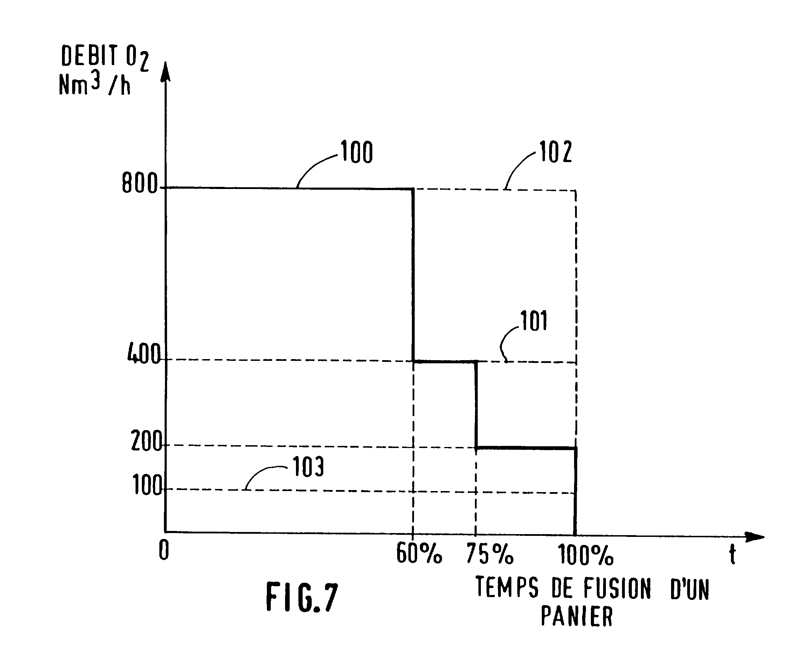

La figure 7 représente un exemple d'injection régulée d'oxygène avec des paliers. Lorsque le contenu de monoxyde de carbone est ≥ 4% vol. dans les fumées, on injecte au maximum 800 Nm$^3$/h d'oxygène dans le four pendant les premiers 60% du temps de fusion d'une charge. S'il est inférieur à 4% vol., alors on injecte un débit de 100 Nm$^3$/h. Entre 60% et 75% du temps de fusion, les niveaux d'injections sont régulés de la même façon entre 400 Nm$^3$/h et 100 Nm$^3$/h, puis entre 75% et 100% du temps entre 200 Nm$^3$/h et 100 Nm$^3$/h. La courbe suivie 100 est représentée en traits pleins. Selon une première variante, on peut rester sur un palier entre 800 et 100 Nm$^3$/h (selon la courbe 102). On peut également 60 à 100% du temps rester entre 400 et 100 Nm$^3$/h (courbe 101).

Bien entendu, tous les injecteurs peuvent être régulés sur la même valeur de consigne, par exemple 4% vol de CO dans les fumées, ou sur des valeurs de consigne différentes (une valeur par injecteur ou une même valeur pour un ou plusieurs groupes d'injecteurs).

Exemple comparatif:

L'exemple ci-après est une comparaison entre une installation fonctionnant selon l'art antérieur (dénommée ci-après « BURNER PC ») et la même installation fonctionnant selon le procédé de l'invention (dénommée ci-après « INVENTION PC »). Cet exemple montre un gain en énergie de 18 kWh/t de métal produit, ce qui pour une coulée d'environ 100 T en un peu plus d'une heure représente une économie de 1 800 kWh. L'installation selon l'art antérieur comportait quatre injections d'oxygène à haute vitesse (250 m/s) tandis que l'installation selon l'invention comportait quatre injections d'oxygène à basse vitesse (110 m/s) selon l'invention. Les conditions (mis à part celles décrites ci-après) étaient sensiblement identiques dans les deux cas. Les résultats obtenus peuvent être synthétisés comme suit :

|  | BURNER PC | INVENTION PC |
|---|---|---|
| CONSOMMATION ELECTRIQUE (kWh/t) | 377 | 359 |
| DUREE DE LA MISE SOUS TENSION ELECTRIQUE (minutes) | 57,5 | 52,4 |
| TOTAL O$_2$ (Nm$^3$/T) INJECTE PENDANT TOUTE LA COULEE | 33,6 | 37,1 |
| O$_2$ (Nm$^3$/T) INJECTE POUR LA POST-COMBUSTION | 11,4 | 13,0 |
| DEBIT MAXIMUM D'OXYGENE AU TOTAL (Nm$^3$/h) | 1 800 | 3 200 |
| VITESSE MAXIMUM DE L'OXYGENE INJECTE (m/s) | 252 | 113 |

**Revendications**

1. Procédé de fusion d'une charge dans un four par apport d'énergie de fusion à la charge, dans lequel sont engendrés des gaz au cours de la fusion de cette charge, et notamment au moins un gaz combustible, en particulier le monoxyde de carbone, procédé dans lequel on injecte un gaz comburant comportant plus de 25 % en volume d'oxygène, pendant au moins certaines périodes, afin de réaliser une post-combustion desdits gaz combustibles et notamment du monoxyde de carbone, caractérisé en ce que, pendant les périodes où on réalise la post-combustion, on injecte le gaz comburant à basse vitesse au-dessus de la charge, sous la forme d'au moins un jet de gaz comburant, chaque jet ayant un débit compris entre 50 et 1200 Nm$^3$/h et une vitesse d'injection dans le four comprise entre 5 m/s et 150 m/s.

2. Procédé selon la revendication 1, dans lequel le four est un four électrique à arc, caractérisé en ce que la direction d'injection de chaque jet de gaz combustible coïncide sensiblement avec les courants gazeux principaux engendrés par la flamme d'arc.

3. Procédé selon l'une des revendications 1 ou 2, caractérisé en ce que l'on prévoit un débit de maintien d'injection de gaz comburant dans le four au moins pendant certaines périodes où il ne se produit pas de post-combustion dans ce four, à une vitesse comprise entre environ 5 m/s et 20 m/s, de manière à éviter ou réduire le bouchage des injecteurs de gaz comburants.

4. Procédé selon l'une des revendications 1 à 3, caractérisé en ce que l'injection d'au moins un jet de gaz comburant est effectuée tangentiellement par rapport à la paroi du four, selon un angle compris entre 25° et 40°, de préférence de l'ordre d'environ 30°.

5. Procédé selon l'une des revendications 1 à 4, caractérisé en ce que l'injection d'au moins un jet de gaz comburant est effectuée du haut vers le bas à partir de la paroi latérale du four, selon un angle compris entre 10° et 20°, et de préférence de l'ordre d'environ 15° par rapport à l'horizontale.

6. Procédé selon l'une des revendications 1 à 5, caractérisé en ce que l'injection du gaz comburant est réalisée à l'aide d'au moins trois injecteurs, de préférence quatre injecteurs, régulièrement répartis sur la surface latérale du four.

7. Procédé selon l'une des revendications précédentes, caractérisé en ce que chaque jet de gaz comburant a un débit compris entre 80 et 850 Nm$^3$/h et une vitesse de sortie de gaz des injecteurs comprise entre 50 et 125 m/s, de préférence environ 100 m/s.

8. Procédé selon l'une des revendications précédentes, caractérisé en ce que l'on analyse en continu les fumées du four et en ce que l'on règle ledit débit de gaz comburant en fonction des résultats de cette analyse.

9. Procédé selon l'une des revendications précédentes, caractérisé en ce que dans un four électrique à arc de fusion de ferrailles pour la production d'aciers, l'analyse des fumées consiste en une mesure de la concentration en monoxyde de carbone dans les fumées.

10. Procédé selon l'une des revendications précédentes, caractérisé en ce qu'on utilise plusieurs groupes d'injecteurs ayant en sortie une composante tangentielle par rapport à l'axe vertical (xx) du four 1, les groupes successifs d'injecteurs étant disposés à des niveaux différents ($n_1$, $n_2$) et orientés dans les sens circonférentiels alternés.

11. Procédé selon l'une des revendications précédentes, caractérisé en ce qu'on utilise une série d'injecteurs tous disposés à un même niveau, une partie de ces injecteurs ayant une composante circonférentielle dans un premier sens et une composante vers le bas suivant un premier angle par rapport à l'horizontale, et les autres injecteurs ayant une composante circonférentielle en sens opposés et une composante vers le bas suivant un second angle, de préférence différent dudit premier angle.

12. Procédé selon l'une des revendications précédentes, caractérisé en ce que le gaz oxygéné est de l'oxygène ayant une pureté d'au moins 88 %.

13. Procédé selon l'une des revendications précédentes, caractérisé en ce que le débit de gaz comburant est variable au cours de la coulée, avec des paliers d'injection d'oxygène.

14. Procédé selon l'une des revendications précédentes, caractérisé en ce que l'on prévoit un débit de maintien d'injection de gaz comburant dans le four au moins pendant certaines périodes où il ne se produit pas de post-combustion dans le four, ce gaz étant de l'air.

15. Procédé selon l'une des revendications précédentes, caractérisé en ce que l'on utilise au moins six injecteurs de gaz comburant.

16. Procédé selon l'une des revendications précédentes, caractérisé en ce que les injecteurs de gaz comburant sont tous placés dans la moitié supérieure du four.

17. Procédé selon la revendication 16, caractérisé en ce que les injecteurs de gaz comburant sont tous placés dans la moitié supérieure du four par rapport au niveau de métal.

18. Procédé selon l'une des revendications précédentes, caractérisé en ce que le gaz comburant est mélangé avec au moins une partie des fumées issues du four, de manière à préchauffer le gaz comburant avant injection dans ledit four.

19. Procédé selon l'une des revendications précédentes, caractérisé en ce que le gaz comburant est préchauffé avant introduction dans le four.

**Patentansprüche**

1. Verfahren zum Schmelzen einer Charge in einem Ofen durch Zuführen von Schmelzenergie zur Charge, in dem während des Schmelzverlaufs dieser Charge Gase und vor allem wenigstens ein brennbares Gas, insbesondere das Kohlenmonoxid, erzeugt werden, ein Verfahren, in dem ein Sauerstoffträgergas, das mehr als 25 Vol.% Sauerstoff enthält, während wenigstens bestimmter Zeiträume eingeblasen wird, um eine Nachverbrennung dieser brennbaren Gase und insbesondere des Kohlenmonoxids durchzuführen, dadurch gekennzeichnet, daß während der Zeiträume, in denen die Nachverbrennung durchgeführt wird, das Sauerstoffträgergas mit niedriger Geschwindigkeit über der Charge in Form wenigstens eines Sauerstoffträgergas-strahls eingeblasen wird, wobei jeder Strahl einen Durchsatz im Bereich zwischen 50 und 1200 $Nm^3/h$ und eine Einblasgeschwindigkeit im Ofen im Bereich zwischen 5 m/s und 150 m/s aufweist.

2. Verfahren nach Anspruch 1, in dem der Ofen ein Elektrolichtbogenofen ist, dadurch gekennzeichnet, daß die Einblasrichtung jeden Sauerstoffträgergas-Strahls in etwa mit den durch die Lichtbogenflamme erzeugten Hauptgasströmen zusammenfällt.

3. Verfahren nach einem der Ansprüche 1 oder 2, dadurch gekennzeichnet, daß vorgesehen wird, einen Durchsatz der Sauerstoffträgergas-Einspeisung in den Ofen wenigstens während bestimmter Zeiträume, in denen keine Nachverbrennung in diesem Ofen erfolgt, bei einer Geschwindigkeit aufrechtzuerhalten, die im Bereich zwischen etwa 5 m/s und 20 m/s liegt, um das Verstopfen der Sauerstoffträgergas-Düsen zu vermeiden oder zu verringern.

4. Verfahren nach einem der Ansprüche 1 bis 3, dadurch gekennzeichnet, daß das Einblasen wenigstens eines Sauerstoffträgergas-Strahls tangential in bezug auf die Ofenwand entsprechend einem Winkel im Bereich zwischen 25° und 40°, bevorzugt in der Großenordnung um 30°, durchgeführt wird.

5. Verfahren nach einem der Ansprüche 1 bis 4, dadurch gekennzeichnet, daß das Einblasen wenigstens eines Sauerstoffträgergas-Strahls von oben nach unten, ausgehend von der Seitenwand des Ofens, entsprechend einem Winkel im Bereich zwischen 10° und 20° und bevorzugt im Bereich um 15° in bezug auf die Horizontale durchgeführt wird.

6. Verfahren nach einem der Ansprüche 1 bis 5, dadurch gekennzeichnet, daß das Einblasen des Sauerstoffträgergases mit Hilfe von wenigstens drei Düsen, bevorzugt vier Düsen, die gleichmäßig über die Seitenfläche des Ofens verteilt sind, durchgeführt wird.

7. Verfahren nach einem der vorangehenden Ansprüche, dadurch gekennzeichnet, daß jeder Strahl des Sauerstoffträgergases einen Durchsatz im Bereich zwischen 80 und 850 $Nm^3/h$ und eine Geschwindigkeit am Gasaustritt der Düsen im Bereich zwischen 50 und 125 m/s, bevorzugt um 100 m/s, aufweist.

8. Verfahren nach einem der vorangehenden Ansprüche, dadurch gekennzeichnet, daß die Rauchgase des Ofens kontinuierlich analysiert werden, und dadurch, daß der Durchsatz des Sauerstoffträgergases in Abhängigkeit von den Ergebnissen dieser Analyse gesteuert wird.

9. Verfahren nach einem der vorangehenden Ansprüche, dadurch gekennzeichnet, daß in einem Elektrolichtbogenofen zum Schmelzen von Schrott für die Stahl-Produktion die Rauchgas-Analyse aus einer Messung der Kohlenmonoxid-Konzentration in den Rauchgasen besteht.

10. Verfahren nach einem der vorangehenden Ansprüche, dadurch gekennzeichnet, daß mehrere Düsen-Gruppen verwendet werden, die am Austritt eine tangentiale Komponente in bezug auf die Hochachse (xx) des Ofens 1 aufweisen, wobei die aufeinanderfolgenden Düsen-Gruppen auf verschiedenen Niveaus ($n_1$, $n_2$) angeordnet und in alternierenden Kreislinien-Richtungen ausgerichtet sind.

11. Verfahren nach einem der vorangehenden Ansprüche, dadurch gekennzeichnet, daß eine Reihe von Düsen verwendet wird, die sämtlich auf gleichem Niveau angeordnet sind, wobei ein Teil dieser Düsen eine Kreislinien-Komponente in einer ersten Richtung und eine nach unten gerichtete Komponente ausweist, die einem ersten Winkel in bezug auf die Horizontale folgt, und die anderen Düsen eine Kreislinien-Komponente in entgegengesetzten Richtungen und eine nach unten gerichtete Komponente aufweisen, die einem zweiten Winkel folgt, der sich bevorzugt vom ersten Winkel unterscheidet.

12. Verfahren nach einem der vorangehenden Ansprüche, dadurch gekennzeichnet, daß das sauerstoffhaltige Gas Sauerstoff einer Reinheit von wenigstens 88% ist.

13. Verfahren nach einem der vorangehenden Ansprüche, dadurch gekennzeichnet, daß der Durchsatz des Sauerstoffträgergases während des Schmelzablaufs mit den Stufen des Sauerstoff-Einblasens variiert wird.

14. Verfahren nach einem der vorangehenden Ansprüche, dadurch gekennzeichnet, daß vorgesehen wird, einen Durchsatz der Sauerstoftträgergas-Injektion im Ofen wenigstens während bestimmter Zeiträume aufrechtzuerhalten, in denen keine Nachverbrennung im Ofen erfolgt, wobei dieses Gas aus Luft besteht.

15. Verfahren nach einem der vorangehenden Ansprüche, dadurch gekennzeichnet, daß wenigstens sechs Sauerstoffträgergas-Düsen verwendet werden.

16. Verfahren nach einem der vorangehenden Ansprüche, dadurch gekennzeichnet, daß die Saueretoffträgergas-Düsen sämtlich in der oberen Hälfte des Ofens angeordnet sind.

17. Verfahren nach einem der vorangehenden Ansprüche, dadurch gekennzeichnet, daß die Sauerstoffträgergas-Düsen sämtlich in der oberen Hälfte des Ofens im Verhältnis zur Metall-Höhe angeordnet sind.

18. Verfahren nach einem der vorangehenden Ansprüche, dadurch gekennzeichnet, daß das Saueretoffträgergas mit wenigstens einem Teil des vom Ofen abgegebenen Rauchgases gemischt wird, um das Sauerstoffträgergas vor dem Einblasen in den Ofen vorzuheizen.

19. Verfahren nach einem der vorangehenden Ansprüche, dadurch gekennzeichnet, daß das Sauerstoffträgergas vor der Einführung in den Ofen vorgeheizt wird.

## Claims

1. Process for melting a charge in a furnace by supplying the charge with fusion energy, wherein gases are produced as this charge melts, and in particular at least one combustible gas, in particular carbon monoxide, a process wherein an oxidizing gas is injected including more than 25 % by volume of oxygen, during at least certain periods, so as to produce post-combustion of the said combustible gases and in particular of carbon monoxide, characterized in that, during periods when post-combustion is carried out, the oxidizing gas is injected at a low velocity above the charge, in the form of at least one jet of oxidizing gas, each jet having a flow rate of between 50 and 1200 $Nm^3$/h and an injection velocity into the furnace of between 5 m/s and 150 m/s.

2. Process according to claim 1, wherein the furnace is an electrical arc furnace, characterized in that the direction in which each combustible gas jet is injected coincides substantially with the principal gas flows produced by the arc flame.

3. Process according to either of claims 1 or 2, characterized in that a maintaining injection flow of oxidizing gas is provided in the furnace at least during certain periods when no post-combustion occurs in this furnace, at a velocity of between 5 m/s and 20 m/s, so as to prevent or reduce obstruction of the oxidizing gas injectors.

4. Process according to one of claims 1 to 3, characterized in that at least one oxidizing gas jet is injected tangentially with respect to the wall of the furnace, at an angle of between 25° and 40°, preferably of the order of 30°.

5. Process according to one of claims 1 to 4, characterized in that at least one oxidizing gas jet is injected downwards from the side wall of the furnace , at an angle of between 10° and 20°, and preferably of the order of about 15° with respect to the horizontal.

6. Process according to one of claims 1 to 5, characterized in that the oxidizing gas is injected with the aid of at least three injectors, preferably four injectors, regularly distributed over the side surface of the furnace.

7. Process according to one of the preceding claims, characterized in that each oxidizing gas jet has a flow rate of between 80 and 850 $Nm^3/h$ and a gas velocity leaving the injectors of between 50 and 125 m/s, preferably about 100 m/s.

8. Process according to one of the preceding claims, characterized in that the fumes from the furnace are continuously analyzed and in that the said flow rate of oxidizing gas is regulated in relation to the results of this analysis.

9. Process according to one of the preceding claims, characterized in that in an electrical arc furnace for melting scrap iron for the production of steels, analysis of the fumes consists of measuring the concentration of carbon monoxide in the fumes.

10. Process according to one of the preceding claims, characterized in that several groups of injectors are used having at the outlet a component tangential with respect to the vertical axis (xx) of the furnace 1, successive groups of injectors being positioned at different levels ($n_1$,$n_2$) and directed in alternate circumferential directions.

11. Process according to one of the preceding claims, characterized in that a series of injectors is used all positioned at the same level, part of these injectors having a circumferential component in a first direction and a downwards component following a first angle with respect to the horizontal, and the other injectors having a circumferential component in the opposite direction and a downwards component following a second angle, preferably different from the said first angle.

12. Process according to one of the preceding claims, characterized in that the oxygenated gas is oxygen having a purity of at least 88 %.

13. Process according to one of the preceding claims, characterized in that the flow rate of the oxidizing gas varies during casting, with oxygen injection stages.

14. Process according to one of the preceding claims, characterized in that a maintaining injection flow of oxidizing gas is provided in the furnace at least during certain periods when no post-combustion occurs in the furnace, this gas being air.

15. Process according to one of the preceding claims, characterized in that at least six oxidizing gas injectors are used.

16. Process according to one of the preceding claims, characterized in that the oxidizing gas injectors are all placed in the upper half of the furnace.

17. Process according to claim 16, characterized in that the oxidizing gas injectors are all placed in the upper half of the furnace with respect to the metal level.

18. Process according to one of the preceding claims, characterized in that the oxidizing gas is mixed with at least part of the fumes coming from the furnace, so as to preheat the oxidizing gas before it is injected into the furnace.

19. Process according to one of the preceding claims, characterized in that the oxidizing gas is preheated before being introduced into the furnace.

FIG.1

FIG.2

FIG.3

FIG. 4

FIG.5

FIG.6

FIG.7